Europäisches Patentamt

European Patent Office

Office européen des brevets

(19)

(11) **EP 1 271 980 A1**

(12) # DEMANDE DE BREVET EUROPEEN

(43) Date de publication:
**02.01.2003 Bulletin 2003/01**

(51) Int Cl.⁷: **H04Q 7/34**

(21) Numéro de dépôt: **02291540.9**

(22) Date de dépôt: **20.06.2002**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **29.06.2001 FR 0108701**

(71) Demandeur: **Evolium S.A.S.**
**75008 Paris (FR)**

(72) Inventeur: **Agin, Pascal**
**94370 Sucy en Brie (FR)**

(74) Mandataire: **El Manouni, Josiane**
**COMPAGNIE FINANCIERE ALCATEL**
**Dépt. Propr. Industrielle,**
**30, avenue Kléber**
**75116 Paris (FR)**

(54) **Procédé de gestion de resources de traitement dans un système de radiocommunications mobiles**

(57) Procédé de gestion de ressources de traitement dans un système de radiocommunications mobiles dans lequel une entité dite première entité gère des ressources de traitement prévues dans une entité distincte dite deuxième entité, procédé dans lequel:

- la deuxième entité signale à la première entité un modèle de ressources représentatif de ses capacités de traitement,

- différents types de première et/ou deuxième entités étant prévus, pouvant supporter différents types de modèles de ressources, correspondant à différentes représentations possibles desdites capacités de traitement, un protocole additionnel est prévu, permettant à la première et à la deuxième entité d'utiliser un même type de modèle de ressources.

FIG_4

EP 1 271 980 A1

**Description**

La présente invention concerne d'une manière générale les systèmes de radiocommunications mobiles, et plus particulièrement les systèmes utilisant la technique CDMA (pour "Code Division Multiple Access" en anglais).

La technique CDMA est notamment utilisée dans les systèmes dits de troisième génération, tels que notamment le système UMTS (pour "Universal Mobile Telecommunication System" en anglais).

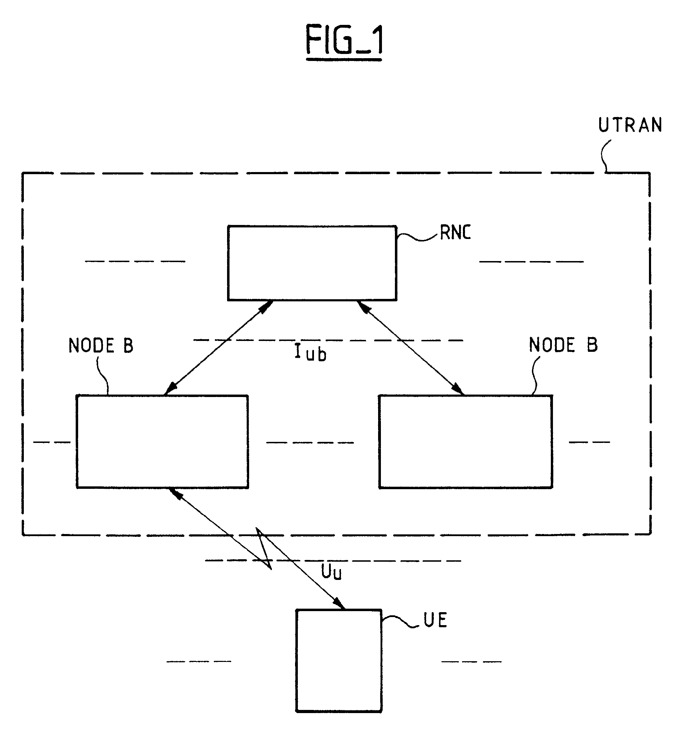

D'une manière générale, un réseau de radiocommunications mobiles comporte, comme rappelé sur la figure 1, un ensemble de stations de base et de contrôleurs de stations de base. Dans l'UMTS, ce réseau est aussi appelé UTRAN, pour "UMTS Terrestrial Radio Access Network", les stations de base sont aussi appelées Node B, et les contrôleurs de stations de base sont aussi appelés RNC (pour "Radio Network Controller" en anglais).

L'UTRAN est en relation d'une part avec des stations mobiles (appelées aussi équipements utilisateur, ou "User Equipment" ou UE), par une interface appelée interface « Uu », et d'autre part avec un coeur de réseau, ou CN (pour « Core Network » en anglais), par une interface appelée interface « Iu ».

Comme rappelé sur la figure 1, les RNC sont reliés :

- aux Node B par une interface appelée interface « Iub »,
- entre eux par une interface appelée interface « Iur »,
- au coeur de réseau CN par une interface appelée interface « Iu ».

Pour un Node B donné, le RNC qui le contrôle est aussi appelé CRNC (pour « Controlling Radio Network Controller » en anglais), et est donc relié à ce Node B via l'interface « Iub ». Le CRNC a un rôle de contrôle de charge et de contrôle et d'allocation de ressources radio pour les Node B qu'il contrôle.

Pour une communication donnée relative à un équipement utilisateur UE donné, il existe un RNC, appelé SRNC (pour « Serving Radio Network Controller » en anglais) qui est connecté au coeur de réseau CN via l'interface « Iu ». Le SRNC a un rôle de contrôle pour la communication considérée, incluant des fonctions d'ajout ou de retrait de liens radio (selon la technique de transmission en macro-diversité), de contrôle de paramètres susceptibles de changer en cours de communication, tels que débit, puissance, facteur d'étalement, ...etc.

Dans les systèmes CDMA les limitations de capacité sur l'interface radio sont fondamentalement différentes de ce qu'elles sont dans les systèmes utilisant d'autres techniques d'accès multiple, telles que notamment la technique TDMA (pour "Time Division Multiple Access" en anglais). La technique TDMA est notamment utilisée dans les systèmes dits de deuxième génération tels que le système GSM (pour "Global System for Mobile communications" en anglais). Dans les systèmes CDMA, tous les utilisateurs partagent la même ressource de fréquence à tout instant. La capacité de ces systèmes est donc limitée par les interférences, ces systèmes étant aussi appelés pour cette raison "soft limited systems" (en anglais).

C'est pourquoi, dans les systèmes CDMA, on prévoit des algorithmes tels que des algorithmes dits de contrôle de charge (ou "load control " en anglais), pour prévenir les surcharges, les détecter et le cas échéant les corriger, afin d'éviter une dégradation de qualité, et des algorithmes dits de contrôle d'admission d'appel (ou "call admission control" en anglais), pour décider si la capacité d'une cellule non utilisée à un instant donné est suffisante pour accepter un nouvel appel dans cette cellule (en fonction de divers paramètres tels que le service requis pour cet appel, ...etc). Dans ce qui suit ces divers algorithmes seront aussi regroupés sous le terme général de contrôle de charge.

Ces algorithmes utilisent habituellement seulement des critères radio, et sont habituellement mis en oeuvre dans le CRNC, qui ne dispose pas d'informations sur la capacité de traitement des Node B qu'il contrôle. Dans ces conditions, il peut par exemple se produire qu'un nouvel appel soit accepté par le CRNC, puis finalement rejeté par manque de ressources de traitement dans le Node B, ce qui entraîne inutilement des traitements supplémentaires dans le CRNC et des échanges de signalisation supplémentaires entre CRNC et Node B.

Bien sûr il serait possible d'éviter ces inconvénients en prévoyant dans les Node B des ressources de traitement suffisantes pour couvrir tous les cas, y compris les cas de capacité maximale (correspondant au cas de très faible niveau d'interférence). Mais ceci conduirait à avoir des stations de base coûteuses, et surdimensionnées la plupart du temps. En outre, dans le cas d'introduction progressive des services offerts par ces systèmes, la capacité de traitement des stations de base peut être limitée au début de la mise en service de ces systèmes, puis progressivement augmentée ensuite.

Il serait donc souhaitable de tenir compte de la capacité de traitement des stations de base (ou Node B) pour le contrôle de la charge dans un tel système.

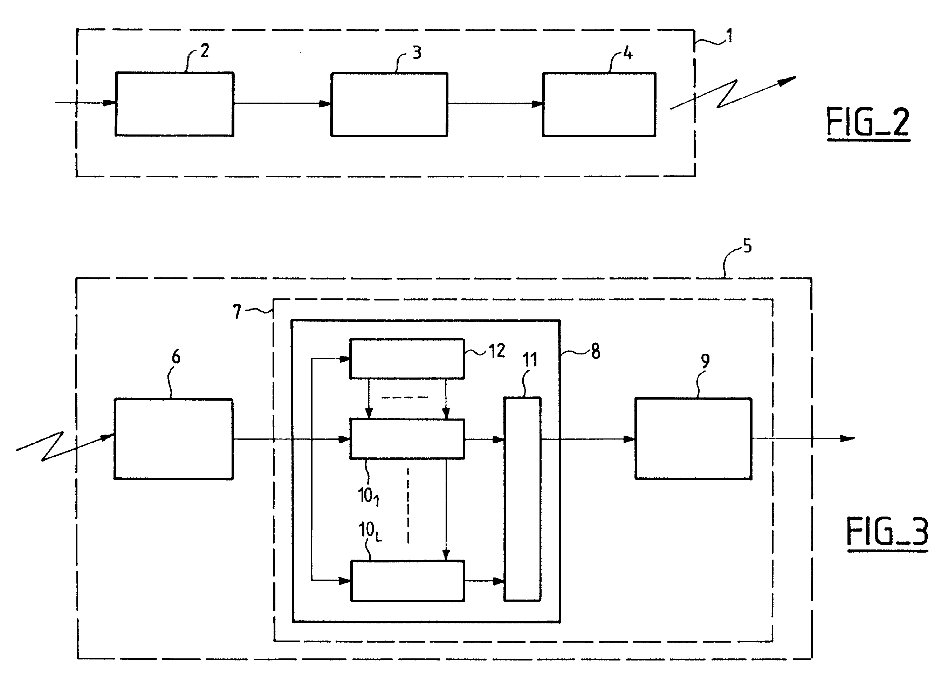

Les figures 2 et 3 rappellent les principaux traitements utilisés, respectivement en émission et en réception, dans une station de base telle que notamment un Node B pour le système UMTS.

Sur la figure 2 est illustré un émetteur 1 comportant:

- des moyens de codage-canal 2,

- des moyens d'étalement 3,
- des moyens d'émission radio-fréquence 4.

Ces différents traitements sont bien connus de l'homme du métier, et ne nécessitent pas d'être re-décrits ici de manière détaillée.

De manière connue, le codage-canal utilise des techniques telles que le codage correcteur d'erreurs et l'entrelacement, permettant d'obtenir une protection contre les erreurs de transmission.

Le codage (tel que le codage correcteur d'erreurs) est destiné à introduire une redondance dans les informations transmises. Le taux de codage est défini comme le rapport du nombre de bits d'information à transmettre sur le nombre de bits transmis ou bits codés. Différents niveaux de qualité de service peuvent être obtenus en utilisant différents types de codes correcteurs d'erreurs. Par exemple, dans l'UMTS, pour un premier type de trafic (tel que des données à haut débit) on utilise un premier type de code correcteur d'erreurs constitué par un turbo-code, et pour un deuxième type de trafic (tel que des données à plus faible débit ou de la voix) on utilise un deuxième type de code correcteur d'erreurs, constitué par un code convolutionnel.

Le codage-canal inclut aussi généralement une adaptation de débit destinée à adapter le débit à transmettre au débit offert pour sa transmission. L'adaptation de débit peut inclure des techniques telles que répétition et/ou poinçonnage, le taux d'adaptation de débit étant alors défini comme le taux de répétition et/ou de poinçonnage.

Le débit brut est défini comme le débit effectivement transmis sur l'interface radio. Le débit net est le débit obtenu après déduction, du débit brut, de tout ce qui n'est pas utile pour l'utilisateur, comme notamment la redondance introduite par le codage.

L'étalement utilise les principes connus de l'étalement de spectre. La longueur du code d'étalement utilisé est aussi appelée facteur d'étalement.

On rappelle que dans un système tel que noatmment l'UMTS le débit net (appelé aussi par la suite plus simplement « débit ») peut varier au cours d'une même communication, et que le facteur d'étalement peut en outre varier en fonction du débit à transmettre.

Sur la figure 3 est illustré un récepteur 5 comportant:

- des moyens de réception radio-fréquence 6,
- des moyens 7 d'estimation des données reçues, comportant eux-mêmes notamment des moyens de désétalement 8 et des moyens de décodage-canal 9.

Ces différents traitements sont également bien connus de l'homme du métier, et ne nécessitent donc pas non plus d'être re-décrits ici de manière détaillée.

La figure 3 illustre un exemple de traitement pouvant être mis en oeuvre dans les moyens de désétalement 8. Ce traitement correspond en l'occurrence à celui mis en oeuvre dans un récepteur de type Rake, permettant d'améliorer la qualité de l'estimation des données reçues, en exploitant les phénomènes de multi-trajets, c'est-à-dire de propagation d'un même signal source selon des trajets multiples, obtenus notamment par réflexions multiples sur des éléments de l'environnement. Dans les systèmes CDMA, contrairement notamment aux systèmes TDMA, ces trajets multiples peuvent en effet être exploités pour améliorer la qualité de l'estimation des données reçues.

Un récepteur Rake comporte un ensemble de L doigts (ou "fingers" en anglais) notés $10_1$ à $10_L$, et des moyens 11 de combinaison des signaux issus de ces différents doigts. Chaque doigt permet de désétaler le signal reçu selon l'un des différents trajets pris en compte, les différents trajets pris en compte étant déterminés par des moyens 12 pour estimer la réponse impulsionnelle du canal de transmission. Les moyens 11 permettent de combiner les signaux désétalés correspondant aux différents trajets considérés, selon un traitement destiné à optimiser la qualité de l'estimation des données reçues.

La technique de réception au moyen d'un récepteur Rake est également utilisée en liaison avec la technique de transmission en macro-diversité, selon laquelle un même signal source est transmis simultanément à une même station mobile par plusieurs stations de base. La technique de transmission en macro-diversité permet non seulement d'améliorer les performances en réception, au moyen d'un récepteur Rake, mais aussi de minimiser les risques de perte d'appel lors de transferts inter-cellulaires, ou "handovers" en anglais. Pour cette raison elle est aussi appelée "soft handover" (en anglais), par opposition à la technique de "hard handover" selon laquelle une station mobile n'est connectée à chaque instant qu'à une seule station de base.

Les moyens d'estimation des données reçues peuvent en outre utiliser diverses techniques destinées à réduire les interférences telles que par exemple la technique dite de détection multi-utilisateur (ou "multi-user detection" en anglais).

Il est aussi possible d'utiliser une pluralité d'antennes de réception. Les moyens d'estimation des données reçues comportent alors en outre des moyens de combinaison des signaux obtenus pour ces différentes antennes de réception, également de manière à optimiser la qualité de l'estimation des données reçues.

Le décodage-canal inclut des fonctions telles qu'un désentrelacement et un décodage correcteur d'erreurs. Le décodage correcteur d'erreurs est généralement nettement plus complexe que le codage correcteur d'erreurs et peut utiliser des techniques telles que par exemple le décodage par maximum de vraisemblance. Par exemple, pour les codes convolutionnels, on peut utiliser un algorithme dit de Viterbi.

Pour pouvoir traiter simultanément plusieurs utilisateurs, une station de base ou Node B comporte un ensemble d'émetteurs et de récepteurs tels que l'émetteur et le récepteur ainsi rappelés. Une grande capacité de traitement est ainsi requise dans une station de base ou Node B, notamment, en réception, pour l'estimation des données reçues.

Comme indiqué précédemment, il est donc souhaitable de tenir compte de la capacité de traitement d'une station de base, pour le contrôle de la charge dans un système tel que le système UMTS par exemple.

Ainsi, pour le système UMTS, il est spécifié dans le document 3G TS 25.433 publié par le 3GPP ("3rd Generation Partnership Project") que le Node B signale au CRNC sa capacité de traitement globale, ou crédit de capacité (ou "capacity credit" en anglais), et la quantité de cette capacité de traitement globale, ou coût d'allocation, qui est nécessaire pour l'allocation d'un canal physique, pour chaque valeur du facteur d'étalement (ou « spreading factor » en anglais, ou SF) possible dans ce système. L'ensemble des coûts d'allocation pour les différentes valeurs possibles du facteur d'étalement est aussi appelé loi de consommation de capacité (ou « capacity consumption law» en anglais). L'ensemble formé par le crédit de capacité et la loi de consommation est aussi appelé modèle de ressources. De telles informations sont signalées par un Node B au CRNC à chaque fois que la capacité de traitement de ce Node B est changée, en utilisant un message appelé « Resource Status Indication », ou en réponse à une requête du CRNC en utilisant un message appelé « Audit Response ».

Dans une première demande de brevet antérieure (demande de brevet français n° 0010538 déposée le 10 Août 2000 par le demandeur), il a été observé qu'une telle solution n'est pas bien adaptée pour tenir compte des limitations dans la capacité de traitement d'un Node B, notamment pour les raisons suivantes:

- Les traitements effectués dans le décodage-canal dépendent du débit net plutôt que du débit brut, ou encore du facteur d'étalement. Par exemple, en considérant un facteur d'étalement de 128 (et donc un débit brut de 30 kbps, le débit net peut avoir différentes valeurs suivant le taux de codage et le taux d'adaptation de débit, typiquement le débit net peut varier de 5 à 15 kbps. Par conséquent, pour un facteur d'étalement fixe, la quantité de traitement dans le Node B peut varier de manière significative (par exemple dans un rapport supérieur à 3). Or ceci n'est pas pris en compte dans cette solution antérieure.
- Le nombre de doigts de récepteur Rake requis pour l'estimation du canal de transmission et des données est fortement dépendant du nombre de liens radio. Or dans la solution antérieure le nombre maximum de doigts de récepteur Rake dans le Node B ne peut pas être pris en compte dans des algorithmes tels que des algorithmes de contrôle de charge ou d'admission d'appels car ce type de limitation n'est pas lié au facteur d'étalement.
- La capacité de traitement signalée par le Node B au CRNC est une capacité de traitement globale qui ne peut pas tenir compte des différentes limitations possibles dans la capacité de traitement de ce Node B.

Dans cette première demande de brevet antérieure, il a été proposé une autre approche, selon laquelle, pour tenir compte des différentes limitations possibles dans la capacité de traitement d'un Node B, le Node B signale au CRNC un ou plusieurs paramètres tels que notamment le nombre maximum de liens radio pouvant être établis, et le débit net maximum pour les liens radio établis, éventuellement pour chaque sens de transmission et/ou pour chaque type de codage-canal susceptible d'être utilisé.

Dans une deuxième demande de brevet antérieure (demande de brevet français n° 0100440 déposée le 12 janvier 2001 par le demandeur), il a encore été proposé une autre approche, selon laquelle on conserve la notion de capacité de traitement globale (ou « capacity credit »), mais le coût d'allocation n'est plus signalé pour chaque valeur possible du facteur d'étalement mais pour différentes valeurs possibles du débit (le débit étant en effet plus représentatif de la capacité de traitement d'un Node B que le facteur d'étalement, comme observé par le demandeur, et comme déjà indiqué ci-dessus).

Ainsi, un objet de cette deuxième demande de brevet antérieure est un procédé de gestion de ressources de traitement dans un système de radiocommunications mobiles dans lequel une entité dite première entité gère des ressources radio et des ressources de traitement correspondantes, prévues dans une entité distincte dite deuxième entité, procédé dans lequel:

- la deuxième entité signale à la première entité sa capacité de traitement globale, ou crédit de capacité, et la quantité de cette capacité de traitement globale, ou coût d'allocation, nécessaire pour l'allocation de ressources radio, pour différentes valeurs de débit,
- la première entité met à jour le crédit de capacité à chaque allocation de ressources radio, en fonction du débit correspondant.

Le terme « allocation de ressources radio » est destiné à englober toutes les opérations suceptibles de modifier l'allocation des ressources radio à l'intérieur de ce système, ces opérations incluant non seulement les opérations d'allocation proprement dites, mais aussi de désallocation ou de reconfiguration.

Ainsi, dans le système UMTS, ces différentes opérations correspondent:

- pour les canaux de transport dédiés, aux procédures d'établissement, addition, effacement, ou reconfiguration, d'un lien radio (ou en anglais, « radio link set-up », « radio link addition », « radio link deletion », « radio link reconfiguration ») telles que définies dans le document 3G TS 25.433 publié par le 3GPP),
- pour les canaux de transport communs, lors des procédures d'établissement, effacement, ou reconfiguration, d'un canal commun (ou en anglais, « common transport channel set-up », « common transport channel deletion », « common transport channel reconfiguration ») telles que définies dans le document 3G TS 25.433 publié par le 3GPP).

Le terme de « mise à jour » du crédit de capacité est destiné à recouvrir aussi bien des opérations par lesquelles ce crédit de capacité est débité, dans le cas où de nouvelles ressources radio sont requises, que des opérations par lesquelles ce crédit de capacité est crédité, dans le cas où de nouvelles ressources radio ne sont plus nécessaires et sont donc restituées.

Ainsi :

- pour les procédures de « radio link set-up », « radio link addition », et « common transport channel set-up », le crédit de capacité est débité,
- pour les procédures de «radio link deletion », et de « common transport channel deletion », le crédit de capacité est crédité,
- pour le cas de « radio link reconfiguration » et de « common transport channel reconfiguration » le crédit de capacité est débité ou crédité selon que la différence entre le coût d'allocation pour le nouveau débit et pour l'ancien débit est négative ou positive.

En outre, dans cette deuxième demande de brevet antérieure, des solutions ont été proposées pour résoudre les problèmes suivants.

Un premier problème est que, alors que le nombre de facteurs d'étalement possibles est fini (par exemple, dans le système UMTS, 8 valeurs de facteur d'étalement sont possibles: 4, 8, 16, 32, 64, 128, 256, 512), le débit peut prendre n'importe quelle valeur positive. Or on comprend qu'en pratique il n'est pas possible ou réaliste que le Node B signale au CRNC le coût d'allocation pour toutes les valeurs de débit.

Un deuxième problème est que, pour la mise à jour du crédit de capacité à chaque allocation de ressources, en fonction du débit correspondant, le CRNC ne dispose pas, du moins dans l'état actuel de la norme, du débit. Au contraire, dans la première solution antérieure rappelée précédemment, le CRNC a connaissance du facteur d'étalement car le facteur d'étalement est signalé par le SRNC au CRNC lorsqu'un nouveau lien radio est ajouté, retranché ou reconfiguré.

Un troisième problème est que le débit peut ne pas être fixe mais varier. Au contraire, le facteur d'étalement, au moins pour le sens descendant, est fixe (et signalé comme indiqué précédemment). Pour le sens montant, le facteur d'étalement est aussi variable mais, ainsi que l'a observé le demandeur, cet aspect du problème n'a pas été pris en considération dans la solution antérieure rappelée précédemment et utilisant le facteur d'étalement.

Pour résoudre le premier problème, il a été proposé dans cette deuxième demande de brevet antérieure, de signaler le coût pour seulement quelques valeurs typiques de débit appelées par la suite débits de référence, et une solution est en outre proposée pour déterminer le coût pour toute valeur de débit, à partir des coûts signalés pour les débits de référence. Par exemple, une interpolation linéaire peut être utilisée (c'est la solution la plus simple), tout en s'assurant que le coût reste toujours positif (c'est-à-dire si le résultat de l'interpolation est négatif, le coût résultant est égal à zéro).

Par exemple quand le débit $R$ n'est pas un débit de référence, le coût noté *"Consumption_cost"* est calculé en fonction des coûts $C_{inf}$ et $C_{sup}$ correspondant aux débits de reference $R_{inf}$ et $R_{sup}$ (avec $R_{inf} < R_{sup}$) qui sont les plus proches du débit $R,$ selon la relation suivante:

$$Consumption\_cost = C_{inf} + \frac{R - R_{inf}}{R_{sup} - R_{inf}}\left(C_{sup} - C_{inf}\right) \qquad (1)$$

Si le résultat est négatif, le coût d'allocation peut être fixé à zéro, soit :

*Consumption_cost* = 0.

D'autres techniques d'interpolation pourraient bien entendu être utilisées.

Par ailleurs, à titre d'exemple de débits de référence, on peut citer par exemple les valeurs 4.75 kbps, 12.2 kbps, 64 kbps, 144 kbps, 384 kbps, 2048 kbps.

Pour résoudre les deuxième et troisième problèmes, dans un système tel que le système UMTS par exemple, il a été proposé dans cette deuxième demande de brevet antérieure, de dériver le débit en fonction d'un paramètre appelé TFCS (pour « Transport Format Combination Set » en anglais).

On rappelle qu'une caractéristique d'un système tel que l'UMTS est la possibilité de transporter plusieurs services sur une même connexion, c'est-à-dire plusieurs canaux de transport sur un même canal physique. De tels canaux de transport (ou TrCH, pour "Transport Channels" en anglais) sont traités séparément selon un schéma de codage-canal (incluant un codage détecteur d'erreurs, un codage correcteur d'erreurs, une adaptation de débit, et un entrelacement, comme rappelé en relation avec la figure 2) avant d'être multiplexés temporellement pour former un canal de transport composite codé (ou CCTrCH, pour "Coded Composite Transport Channel" en anglais) à transmettre sur un ou plusieurs canaux physiques. Plus d'informations sur ces aspects de l'UMTS peuvent être trouvés dans le document 3G TS25 212 V3.0.0 publié par le 3GPP.

On rappelle également qu'une autre caractéristique d'un système tel que l'UMTS est d'autoriser des débits variables pour les utilisateurs, en cours de communication. Les données transportées par les canaux de transport sont organisées en unités de données appelées blocs de transport (ou « Transport Blocks » en anglais) reçus avec une périodicité appelée intervalle de temps de transmission (ou TTI, pour « Transmission Time Interval » en anglais). Le nombre et la taille des blocs de transport reçus pour un canal de transport donné sont variables en fonction du débit, et on définit la notion de format de transport comme la connaissance du nombre et de la taille de ces blocs de transport (et donc du débit instantané), pour un canal de transport donné. On définit aussi la notion de combinaison de format de transport (ou TFC, pour « Transport Format Combination » en anglais) comme une combinaison de formats de transport autorisée pour différents canaux de transport destinés à être multiplexés selon un même canal de transport composite codé. On définit enfin la notion d'ensemble de combinaisons de format de transport (ou TFCS, pour « Transport Format Combination Set » en anglais) comme l'ensemble de telles combinaisons possibles de formats de transport. Plus d'informations sur ces aspects de l'UMTS peuvent être trouvés dans le document TS 25.302 V.3.7.0 publié par le 3GPP.

Le débit pour chaque TFC à l'intérieur d'un TFCS peut alors être calculé selon la relation suivante :

$$br_j = \sum_{k=1}^{n} \frac{N_k^{(j)} L_k^{(j)}}{TTI_k} \qquad (2)$$

où $br_j$ est le débit du $j$ième TFC dans le TFCS, $n$ est le nombre de canaux de transport dans le CCTrCh, $N_k^{(j)}$ et $L_k^{(j)}$ sont respectivement le nombre de blocs de transport et la taille des blocs de transport (en nombre de bits) pour le $k$ième canal de transport dans le $j$ième TFC et $TTI_k$ est l'intervalle de temps de transmission ou TTI (en secondes) du $k$ième canal de transport.

D'autres formules pourraient bien entendu être utilisées, suivant la façon de définir le débit pour les données à traiter.

En outre, la difficulté est que le débit n'est pas fixe mais peut varier (c'est-à-dire n'importe quel TFC à l'intérieur du TFCS peut être utilisé pendant la communication) et cette variation n'est pas connue a priori du Node B ou de l'UE, et ne peut pas être connue a priori. La solution la plus simple est de considérer seulement le débit maximum, ou le débit qui maximise le coût d'allocation (ce dernier débit est habituellement égal au débit maximum mais ce n'est pas toujours le cas), parmi tous les TFC à l'intérieur du TFCS. En effet, lorsqu'un nouveau lien radio est accepté, il est nécessaire de vérifier que le Node B a des ressources suffisantes pour traiter jusqu'au débit maximum autorisé pour ce nouveau lien radio.

En notant *« Maximum _ bit _ rate »* le débit défini par la relation :

$$Maximum\_bit\_rate = \mathop{Max}\limits_{j} br_j \qquad (3)$$

la relation (1) devient alors :

$$Consumption\_cost = C_{\inf} + \frac{Maximum\_bit\_rate - R_{\inf}}{R_{\sup} - R_{\inf}}\left(C_{\sup} - C_{\inf}\right) \qquad (4)$$

La gestion de ressources de traitement ainsi décrite dans cette deuxième demande de brevet antérieure repose ainsi sur les paramètres suivants qui nécessitent d'être signalés par le Node B au CRNC, à la fois pour les canaux de transport dédiés (correspondant au cas de ressources radio allouées individuellement à des utilisateurs) et pour les canaux de transport communs (correspondant au cas de ressources radio partagées entre plusieurs utilisateurs) :

- la capacité totale (ou crédit total) qui définit les ressources de traitement du Node B,
- la loi de consommation qui donne le coût d'allocation pour des débits de référence typiques, et qui permet de trouver (avec des techniques d'interpolation) les coûts d'allocation pour tous les débits possibles.

Comme indiqué précédemment, il serait donc plus avantageux d'utiliser un modèle de ressources basé sur le débit, plutôt qu'un modèle de ressources basé sur le facteur d'étalement. Cependant, tous les équipements actuels utilisant un modèle de ressources basé sur le facteur d'étalement ne pourront pas nécessairement être modifiés pour pouvoir utiliser un modèle de ressources basé sur le débit. En outre, pour les équipements futurs, la possibilité d'utiliser un modèle de ressources basé sur le facteur d'étalement, en plus d'un modèle de ressource basé sur le débit, pourra éventuellement être maintenue. Un problème de compatibilité pourra alors se poser entre différents types d'équipements, suivant le type de modèle de ressources qu'ils utilisent.

La présente invention a notamment pour but d'apporter une solution à ce nouveau problème.

Un des objets de la présente invention est ainsi un procédé de gestion de ressources de traitement dans un système de radiocommunications mobiles dans lequel une entité dite première entité gère des ressources de traitement prévues dans une entité distincte dite deuxième entité, procédé dans lequel:

- la deuxième entité signale à la première entité un modèle de ressources représentatif de ses capacités de traitement,
- différents types de première et/ou deuxième entités étant prévus, pouvant supporter différents types de modèles de ressources, correspondant à différentes représentations possibles desdites capacités de traitement, un protocole additionnel est prévu, permettant à la première et à la deuxième entité d'utiliser un même type de modèle de ressources.

Suivant une autre caractéristique:

- deux types de modèles de ressources, dits respectivement ancien et nouveau modèle, sont prévus,
- deux types d'entités, dites respectivement ancienne et nouvelle entité, sont prévues: une nouvelle première entité supportant l'ancien modèle et le nouveau modèle, une nouvelle deuxième entité supportant le nouveau modèle, ou le nouveau modèle et l'ancien modèle, et une ancienne première ou deuxième entité supportant seulement l'ancien modèle.

Suivant une autre caractéristique, ledit protocole additionnel comporte des étapes selon lesquelles:

- une nouvelle deuxième entité signale, en plus du modèle lui-même, le type de modèle utilisé,
- une nouvelle première entité recevant une signalisation relative au type de modèle utilisé, utilise ce type de modèle.

Suivant une autre caractéristique, ledit protocole additionnel comporte une étape préalable selon laquelle :

- une nouvelle deuxième entité supportant l'ancien et le nouveau modèle sélectionne un de ces deux types de modèles, comme étant le plus représentatif de ses capacités de traitement.

Suivant une autre caractéristique, ledit protocole additionnel comporte des étapes selon lesquelles:

- une ancienne deuxième entité ne signale pas, en plus du modèle lui-même, le type de modèle utilisé,
- une nouvelle première entité ne recevant pas de signalisation relative au type de modèle utilisé l'interprète comme signifiant que le modèle est signalé par une ancienne deuxième entité et donc que le modèle signalé est un ancien modèle.

**EP 1 271 980 A1**

Suivant une autre caractéristique, ledit protocole additionnel comporte des étapes selon lesquelles:

- une ancienne première entité signale à une deuxième entité qu'elle ne supporte pas le nouveau modèle,
- une nouvelle deuxième entité supportant le nouveau modèle et l'ancien modèle, et recevant une telle signalisation, sélectionne l'ancien modèle, pour signalisation à ladite ancienne première entité.

Suivant une autre caractéristique:

- ledit ancien modèle est un modèle de ressources basé sur le facteur d'étalement,
- ledit nouveau modèle est un modèle de ressources basé sur le débit.

Suivant une autre caractéristique:

- ladite première entité est un contrôleur de stations de base,
- ladite deuxième entité est une station de base.

La présente invention a également pour objet :

- une station de base (telle que Node B dans un système tel que l'UMTS),
- un contrôleur de stations de base (tel que RNC, pour « Radio Network Controller », dans un système tel que l'UMTS),
- un réseau de radiocommunications mobiles,
- un système de radiocommunications mobiles,
- tous comportant des moyens pour mettre en oeuvre un procédé suivant l'invention.

D'autres objets et caractéristiques de la présente invention apparaîtront à la lecture de la description suivante d'exemples de réalisation, faite en relation avec les dessins ci-annexés dans lesquels:

- la figure 1, décrite précédemment, rappelle l'architecture générale d'un système de radiocommunications mobiles, tel que notamment le système UMTS,
- les figures 2 et 3, décrites précédemment, rappellent les principaux traitements utilisés, respectivement en émission et en réception, dans une station de base, telle qu'un Node B pour le système UMTS,
- les figures 4 à 6 sont des schémas destinés à illustrer des exemples de mise en oeuvre d'un procédé suivant la présente invention.

La présente invention a donc essentiellement pour but de résoudre le problème de compatibité (ou « backward compatibility » en anglais) entre différents types d'équipements, tel que présenté précédemment. La présente invention permet ainsi notamment à un CRNC de pouvoir fonctionner avec des Node B supportant les deux types de modèles de ressources (l'un basé sur le facteur d'étalement, l'autre basé sur le débit), ou encore à un CRNC supportant un modèle de ressources basé sur le débit de pouvoir fonctionner avec un Node B supportant un modèle de ressources basé sur le facteur d'étalement.

La présente invention a donc notamment pour objet un procédé de gestion de ressources de traitement dans un système de radiocommunications mobiles dans lequel une entité dite première entité gère des ressources de traitement prévues dans une entité distincte dite deuxième entité, procédé dans lequel :

- la deuxième entité signale à la première entité un modèle de ressources représentatif de ses capacités de traitement,
- différents types de première et/ou deuxième entités étant prévus, pouvant supporter différents types de modèles de ressources, correspondant à différentes représentations possibles desdites capacités de traitement, un protocole additionnel est prévu, permettant à la première et à la deuxième entité d'utiliser un même type de modèle de ressources.

Notamment, deux types de modèles de ressources, dits respectivement ancien et nouveau modèle, peuvent être prévus.

Notamment, un « nouveau modèle » peut être un modèle basé sur le débit (notamment du type décrit dans la demande de brevet français n° 0100440 rappelée précédemment), et un « ancien modèle » un modèle basé sur le facteur d'étalement (notamment du type décrit dans le document 3G TS 25.433 publié par le 3GPP rappelé précédemment).

Dans ce qui suit, on désigne aussi par première entité un CRNC et par deuxième entité un Node B. On désigne aussi par « nouvelle première entité » (« nouveau CRNC ») une entité (CRNC) supportant l'ancien modèle et le nouveau modèle. On désigne aussi par « nouvelle deuxième entité » (« nouveau Node B ») une entité (Node B) supportant le nouveau modèle, ou le nouveau et l'ancien modèle. On désigne aussi par « ancienne entité » (« ancien CRNC » ou « ancien Node B ») une entité (CRNC ou Node B) supportant seulement l'ancien modèle.

Ledit protocole additionnel peut notamment prévoir qu'un nouveau Node B signale, en plus du modèle lui-même, le type de modèle utilisé.

Ainsi, un nouveau CRNC recevant une signalisation relative au type de modèle utilisé par le Node B, peut alors utiliser le même type de modèle que le Node B.

Dans le cas de nouveau Node B supportant le nouveau modèle et l'ancien modèle, le type de modèle utilisé peut être sélectionné parmi les deux types de modèles supportés par le Node B, comme étant celui qui est le plus représentatif de ses capacités de traitement.

Dans le cas de nouveau Node B supportant seulement le nouveau modèle, le type de modèle utilisé est alors le nouveau modèle.

Une telle signalisation relative au type de modèle utilisé par le Node B peut utiliser n'importe quel message transmis du Node B au CRNC, de préférence en utilisant le protocole NBAP (pour « Node B Application Part » en anglais), et de préférence encore en utilisant des messages qui transportent déjà des informations liées au modèle de ressources du Node B (tels que notamment les messages « Resource Status Indication » ou « Audit Response » rappelés précédemment).

La quantité de signalisation additionnelle requise est relativement faible puisque seul un nouveau champ susceptible de prendre deux valeurs possibles est suffisant, aucune autre modification n'étant requise. Ceci est possible puisque, dans l'exemple considéré, quel que soit le type de modèle utilisé, l'information relative au modèle lui-même est signalée de la même façon, c'est-à-dire plusieurs coûts sont signalés par le Node B au CRNC, ces coûts étant liés, selon le type de modèle, à des débits de référence ou à des facteurs d'étalement (comme rappelé précédemment). En d'autres termes, la structure de signalisation relative au modèle de ressources est la même quel que soit le type de modèle et seule l'interprétation de ces modèles de ressources par le Node B/CRNC est différente selon le type de modèle, pourvu que le nombre de débits de référence soit choisi égal au nombre de facteurs d'étalement, ce qui est le cas préféré.

Cependant il est aussi possible d'avoir moins de débits de référence que de facteurs d'étalement. Dans ce cas, lorsque le modèle de ressources basé sur le débit est sélectionné, les derniers coûts sont ignorés (puisqu'il y a alors plus de coûts que de débits de référence). Il est aussi possible d'avoir un plus grand nombre de débits de référence que de facteurs d'étalement, mais dans ce cas la signalisation pour les lois de consommation doit être modifiée (parce qu'une nouvelle signalisation est requise pour les coûts additionnels).

Des exemples de réalisation dudit protocole additionnel sont maintenant décrits, pour les différents cas possibles:

- Nouveau CRNC + nouveau Node B:
  Dans ce cas, comme indiqué ci-dessus, le Node B signale le type de modèle qu'il utilise, et le CRNC peut, à partir de l'information ainsi signalée, utiliser le même type de modèle (étant entendu qu'un nouveau CRNC supporte la signalisation relative au type de modèle utilisé par le Node B).
- Ancien CRNC + ancien Node B:
  Dans ce cas, l'ancien modèle est utilisé, et aucune signalisation additionnelle n'est nécessaire.
- Nouveau CRNC + ancien Node B:
  Dans ce cas, le Node B utilise l'ancien modèle et aucune signalisation relative au type de modèle utilisé par le Node B n'est prévue (étant entendu qu'un ancien Node B ne supporte pas cette signalisation). Le nouveau CRNC peut ainsi savoir que ce Node B ne supporte pas cette signalisation et donc que ce Node B utilise l'ancien modèle (étant entendu qu'un nouveau CRNC supporte la signalisation relative au type de modèle utilisé par le Node B).
- Ancien CRNC + nouveau Node B:
  Dans ce cas, si le Node B signale un type de modèle au CRNC, cette information est ignorée par le CRNC qui n'est pas capable de la lire (étant entendu qu'un ancien CRNC ne supporte pas la signalisation relative au type de modèle utilisé par le Node B) et fait comme si le Node B utilisait l'ancien modèle. Pour résoudre le problème de compatibilité qui se pose alors, une solution est d'autoriser le CRNC à signaler au Node B le type de modèle qu'il supporte (de préférence via la signalisation NBAP, par exemple dans un message du type « call set-up request »), de sorte qu'un nouveau Node B ne signale pas un nouveau modèle à un ancien CRNC (étant entendu qu'un nouveau Node B supporte cette signalisation relative au type de modèle supporté par le CRNC).

En d'autres termes, ledit protocole additionnel peut notamment comporter des étapes selon lesquelles:

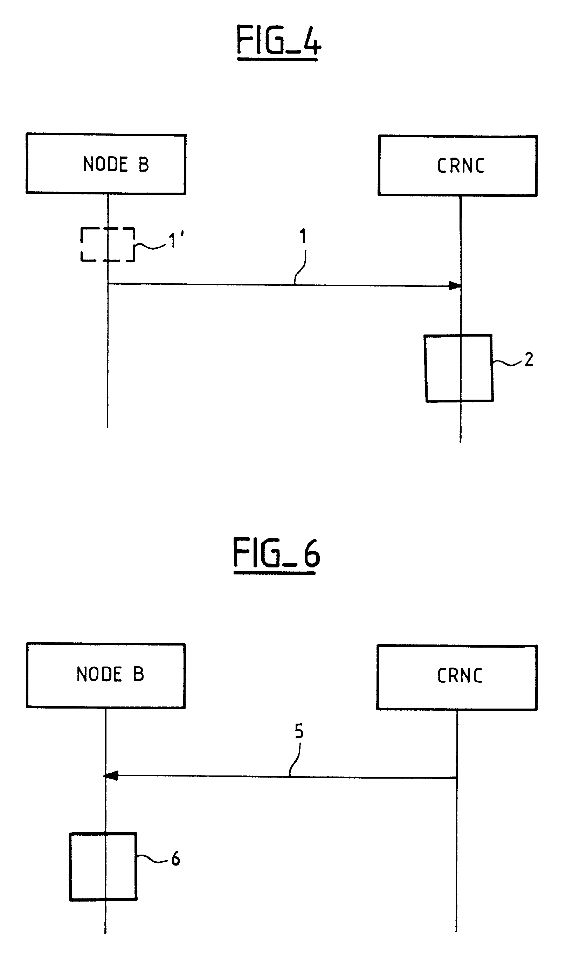

- une nouvelle deuxième entité (ou nouveau Node B) signale, en plus du modèle lui-même, le type de modèle utilisé, ceci étant illustré au moyen d'une étape notée 1 sur la figure 4,
- une nouvelle première entité (ou nouveau CRNC) recevant une signalisation relative au type de modèle utilisé, utilise ce type de modèle, ceci étant illustré au moyen d'une étape notée 2 sur la figure 4,

Eventuellement, ledit protocole additionnel peut comporter une étape préalable selon laquelle :

- une nouvelle deuxième entité supportant l'ancien et le nouveau modèle sélectionne un de ces deux types de modèles, comme étant le plus représentatif de ses capacités de traitement, ceci étant illustré au moyen d'une étape notée 1' sur la figure 4.

Ledit protocole additionnel peut en outre comporter des étapes selon lesquelles:

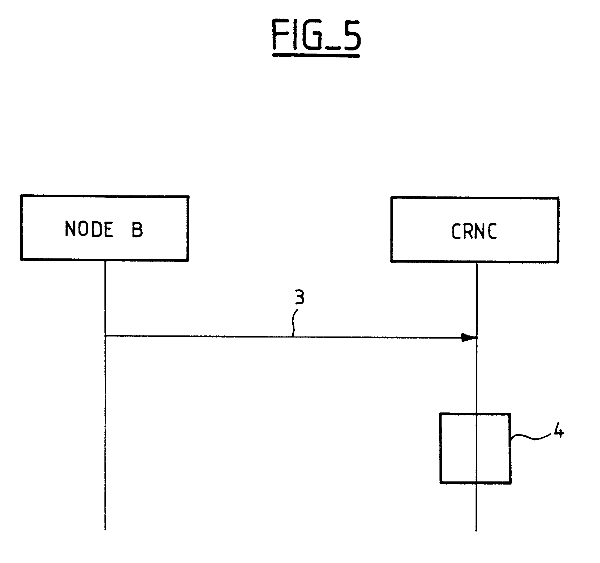

- une ancienne deuxième entité (ou ancien Node B) ne signale pas, en plus du modèle lui-même, le type de modèle utilisé, ceci étant illustré au moyen d'une étape notée 3 sur la figure 5,
- une nouvelle première entité (ou nouveau CRNC) ne recevant pas de signalisation relative au type de modèle utilisé l'interprète comme signifiant que le modèle est signalé par une ancienne deuxième entité (ou ancien Node B) et donc le modèle signalé est un ancien modèle, ceci étant illustré au moyen d'une étape notée 4 sur la figure 5.

Ledit protocole additionnel peut en outre comporter des étapes selon lesquelles:

- une ancienne première entité (ou ancien CRNC) signale à une deuxième entité qu'elle ne supporte pas le nouveau modèle, ceci étant illustré au moyen d'une étape notée 5 sur la figure 6,
- une nouvelle deuxième entité (ou nouveau Node B) supportant le nouveau modèle et l'ancien modèle, et recevant une telle signalisation, sélectionne l'ancien modèle, pour signalisation à ladite ancienne première entité (ou ancien CRNC), ceci étant illustré au moyen d'une étape notée 6 sur la figure 6.

D'autres exemples de réalisation seraient bien entendu possibles, sans sortir du cadre de la présente invention.

En outre, l'exemple selon lequel un nouveau Node B signale le modèle et le type de modèle utilisé, s'applique particulièrement au cas où la structure de signalisation relative au modèle est la même quel que soit le type de modèle. Une alternative (plus coûteuse en signalisation) consisterait, pour un nouveau Node B supportant les deux types de modèles, à signaler les deux modèles. Le nouveau modèle serait bien sûr ignoré par un ancien CRNC, et utilisé par un nouveau CRNC seulement si le Node B signale qu'il l'utilise. Une telle solution permettrait cependant d'éliminer la contrainte d'avoir une signalisation identique pour les deux types de modèles, et donc d'avoir éventuellement des structures de modèles très différents les uns des autres.

La présente invention a également pour objet :

- une station de base (telle que Node B dans un système tel que l'UMTS), et un contrôleur de stations de base (tel que RNC, pour « Radio Network Controller », dans un système tel que l'UMTS),
- un réseau de radiocommunications mobiles,
- un système de radiocommunications mobiles,
- tous comportant des moyens pour mettre en oeuvre un procédé suivant l'invention.

Ces différents moyens peuvent opérer suivant le procédé décrit précédemment; leur réalisation particulière ne présentant pas de difficulté particulière pour l'homme du métier, de tels moyens ne nécessitent pas d'être décrits ici de manière plus détaillée que par leur fonction.

**Revendications**

1. Procédé de gestion de ressources de traitement dans un système de radiocommunications mobiles dans lequel une entité dite première entité gère des ressources de traitement prévues dans une entité distincte dite deuxième entité, procédé dans lequel:

   - la deuxième entité signale à la première entité un modèle de ressources représentatif de ses capacités de traitement,
   - différents types de première et/ou deuxième entités étant prévus, pouvant supporter différents types de modèles de ressources, correspondant à différentes représentations possibles desdites capacités de traitement, un protocole additionnel est prévu, permettant à la première et à la deuxième entité d'utiliser un même type de modèle de ressources.

2. Procédé selon la revendication 1, dans lequel:

   - deux types de modèles de ressources, dits respectivement ancien et nouveau modèle, sont prévus,
   - deux types d'entités, dites respectivement ancienne et nouvelle entité, sont prévues: une nouvelle première entité supportant l'ancien modèle et le nouveau modèle, une nouvelle deuxième entité supportant le nouveau modèle, ou le nouveau modèle et l'ancien modèle, et une ancienne première ou deuxième entité supportant seulement l'ancien modèle.

3. Procédé selon la revendication 2, dans lequel ledit protocole additionnel comporte des étapes selon lesquelles:

   - une nouvelle deuxième entité signale, en plus du modèle lui-même, le type de modèle utilisé,
   - une nouvelle première entité recevant une signalisation relative au type de modèle utilisé, utilise ce type de modèle.

4. Procédé selon la revendication 3, dans lequel ledit protocole additionnel comporte une étape préalable selon laquelle :

   - une nouvelle deuxième entité supportant l'ancien et le nouveau modèle sélectionne un de ces deux types de modèles, comme étant le plus représentatif de ses capacités de traitement.

5. Procédé selon l'une des revendications 2 à 4, dans lequel ledit protocole additionnel comporte des étapes selon lesquelles:

   - une ancienne deuxième entité ne signale pas, en plus du modèle lui-même, le type de modèle utilisé,
   - une nouvelle première entité ne recevant pas de signalisation relative au type de modèle utilisé l'interprète comme signifiant que le modèle est signalé par une ancienne deuxième entité et donc que le modèle signalé est un ancien modèle.

6. Procédé selon l'une des revendications 2 à 5, dans lequel ledit protocole additionnel comporte des étapes selon lesquelles:

   - une ancienne première entité signale à une deuxième entité qu'elle ne supporte pas le nouveau modèle,
   - une nouvelle deuxième entité supportant le nouveau modèle et l'ancien modèle, et recevant une telle signalisation, sélectionne un ancien modèle, pour signalisation à ladite ancienne première entité.

7. Procédé selon l'une des revendications 2 à 6, dans lequel:

   - ledit ancien modèle de ressources est un modèle de ressources basé sur le facteur d'étalement,
   - ledit nouveau modèle de ressources est un modèle de ressources basé sur le débit.

8. Procédé selon l'une des revendications 2 à 7, dans lequel:

   - ladite première entité est un contrôleur de stations de base,
   - ladite deuxième entité est une station de base.

9. Système de radiocommunications mobiles, comportant des moyens pour mettre en oeuvre un procédé selon l'une des revendications là 8.

10. Réseau pour système de radiocommunications mobiles, comportant des moyens pour mettre en oeuvre un procédé selon l'une des revendications 1 à 8.

11. Contrôleur de stations de base pour système de radiocommunications mobiles, comportant des moyens pour mettre en oeuvre un procédé selon l'une des revendications là 8.

12. Station de base pour système de radiocommunications mobiles , comportant des moyens pour mettre en oeuvre un procédé selon l'une des revendications là 8.

# FIG_1

FIG_2

FIG_3

14

# FIG_4

# FIG_6

# FIG_5

NODE B

CRNC

3

4

**Office européen des brevets**

# RAPPORT DE RECHERCHE EUROPEENNE

Numéro de la demande

EP 02 29 1540

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | WO 00 54536 A (NOKIA NETWORKS OY ;MARJELUND PEKKA (FI); VIALEN JUKKA (FI)) 14 septembre 2000 (2000-09-14) * page 5, ligne 25 - page 6, ligne 32 * * revendications 1,5 * | 1 | H04Q7/34 |
| X | WO 01 24557 A (QUALCOMM INC) 5 avril 2001 (2001-04-05) * page 2, ligne 28 - page 3, ligne 20 * * page 8, ligne 3 - ligne 10 * | 1 | |
| A | EUROPEAN TELECOMMUNICATIONS STANDARDS INSTITUTE: "Technical Specification;Universal Mobile Telecommunications System (UMTS); UTRAN Iub Interface NBAP Signalling (3G TS 25.433 version 3.2.0 Release 1999)" ETSI TS 125 433 V3.2.0, XX, XX, juin 2000 (2000-06), XP002166441 * le document en entier * | 1-12 | |

**DOMAINES TECHNIQUES RECHERCHES (Int.Cl.7)**

H04Q

Le présent rapport a été établi pour toutes les revendications

| Lieu de la recherche | Date d'achèvement de la recherche | Examinateur |
|---|---|---|
| LA HAYE | 11 septembre 2002 | Dionisi, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 02 29 1540

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-09-2002

| Document brevet cité au rapport de recherche | | Date de publication | Membre(s) de la famille de brevet(s) | | Date de publication |
|---|---|---|---|---|---|
| WO 0054536 | A | 14-09-2000 | WO | 0054536 A1 | 14-09-2000 |
| | | | AU | 3411299 A | 28-09-2000 |
| | | | EP | 1159846 A1 | 05-12-2001 |
| | | | US | 2002071480 A1 | 13-06-2002 |
| WO 0124557 | A | 05-04-2001 | AU | 7617000 A | 30-04-2001 |
| | | | EP | 1216588 A1 | 26-06-2002 |
| | | | WO | 0124557 A1 | 05-04-2001 |

EPO FORM P0460

Pour tout renseignement concernant cette annexe : voir Journal Officiel de l'Office européen des brevets, No.12/82